# EUROPEAN PATENT APPLICATION

(11) **EP 4 053 211 A1**
(43) Date of publication of application: **07.09.2022**
(21) Application number: 22160143.8
(22) Date of filing: 04.03.2022
(51) Int. Cl.: C08L 23/16, C08L 73/00

(54) **THERMOPLASTIC VULCANIZATES MADE OF EPDM AND ALIPHATIC POLYKETONE**

(30) Priority: 05.03.2021 US 202163156970 P; 18.02.2022 US 202263311655 P
(71) Applicant: Parker-Hannifin Corporation, Cleveland, Ohio 44124-4141 (US)
(72) Inventor: JINDAL, Aditya, Cuyahoga Falls, OH 44221 (US); BRADY, Aidan J., Cleveland, OH 44111 (US); MALLAMACI, Michael P., North Canton, OH 44720 (US); CONNELL, Margaret, Cleveland, OH 44113 (US); MILESKI, Matthew, Hudson, OH 44236 (US)
(74) Representative: Neilson, Martin Mark

(57) **Abstract**

Disclosed are thermoplastic vulcanizates comprising a plastic phase and a rubber phase and process for preparing such thermoplastic vulcanizates, wherein the plastic phase comprises an aliphatic polyketone and the rubber phase comprises EPDM.

## Description

### Cross-reference to related applications

This application claims priority from U.S. Provisional Application No. 63/156,970, filed March 5, 2021, and U.S. Provisional Application No. 63/311,655, filed February 18, 2022, the disclosures of which are hereby incorporated by reference in their entirety.

### TECHNICAL FIELD

The present invention relates broadly to thermoplastic vulcanizate (TPV) materials and in particular to a TPV material comprising aliphatic polyketone as the thermoplastic polymer phase and EPDM as the rubber phase. The compositions of this invention can be readily produced and fabricated using commercial suitable plastics compounding and fabricating equipment to yield molded (by injection, extrusion or blow molding) parts with excellent surface appearance.

### BACKGROUND

The preparation of thermoplastic elastomers by dynamic vulcanization, i.e., thermoplastic vulcanizates (TPVs), although established over four decades ago, is still commercially viable with the use of only one plastic and rubber melt blend, namely isotactic polypropylene (PP) and ethylene-propylene-diene monomer rubber (EPDM) rubber.

Current hydrolysis-resistant hoses for water and water-glycol applications typically are based on EPDM rubber, production of which requires extrusion onto a mandrel with a secondary cure process in an autoclave, and these hoses have limited high temperature capabilities. An alternative is a hose made from a high temperature, hydrolysis resistant thermoplastic. However, this solution sacrifices desired flexibility. Another problem is the increasing desire from customers to use sustainably sourced materials to reduce the overall carbon footprint of their products.

It would therefore be an improvement to provide a material that did not require these manufacturing steps and will have superior strength, hydrolysis resistance, high flexibility, and is at least partially made from recycled materials.

### SUMMARY

At least one embodiment of the invention provides a thermoplastic vulcanizate (TPV) material comprising aliphatic polyketone as the thermoplastic polymer phase and EPDM as the rubber phase.

In one aspect, this disclosure provides thermoplastic vulcanizate compositions, typically hydrolysis-resistant thermoplastic vulcanizates that are readily processable. These TPVs are made by dynamic vulcanization of EPDM with high melting point, semi-crystalline thermoplastic materials. The thermoplastic vulcanizates disclosed herein are typically hydrolysis resistant at a broad range of temperatures.

In another aspect, the semi-crystalline thermoplastic materials are selected from aliphatic polyketones.

In a broad aspect, this disclosure provides thermoplastic vulcanizates comprising a plastic phase and a rubber phase, wherein
the plastic phase comprising from about 30 parts to about 80 parts, based on 100 parts of total rubber and plastic, of an aliphatic polyketone;
the rubber phase comprising from about 70 parts to about 20 parts, based on 100 parts of total rubber and plastic, of an ethylene-propylene-diene monomer rubber (EPDM);
and wherein crosslinks are present in the EPDM.

The crosslinks can include allyl/allyl, allyl/alkyl, alkyl/alkyl, alkyl/alkene, and/or allyl/alkene crosslinks. As is known in the art, these crosslinks are formed in the EPDM rubber as a result of peroxide decomposition and radical formation.

In another aspect, the disclosure provides thermoplastic vulcanizates prepared by dynamically crosslinking a melt blend with a curing agent, wherein the melt blend comprises a plastic phase and a rubber phase, and wherein
the plastic phase comprises from about 30 parts to about 80 parts by weight, based on 100 parts by weight of the plastic and rubber phases, of a polyketone having a melting point of about 180°C to about 260°C, and
the rubber phase comprises from about 70 parts to about 20 parts, by weight based on 100 parts by weight of the plastic and rubber phases, of ethylene-propylene-diene monomer rubber (EPDM).

In another aspect, this disclosure provides thermoplastic elastomers comprising a plastic phase and a rubber phase, wherein
a) the plastic phase comprises from about 30 parts to about 80 parts by weight, based on 100 parts by weight of the plastic and rubber phases, of a polyketone having a melting point of about 180°C to about 260°C; and
b) the rubber phase comprises from about 70 parts to about 20 parts, by weight based on 100 parts by weight of the plastic and rubber phases, of ethylene-propylene-diene monomer rubber (EPDM).

The thermoplastic elastomers are typically pre-vulcanized compositions and can be used as intermediates in the preparation of the disclosed fully vulcanized TPV products. These elastomers are pre-crosslinked compositions and are substantially free of cross-linked rubber material. The final thermoplastic vulcanizates of this disclosure can be made directly from the thermoplastic elastomers by mixing the elastomer composition with a curing agent and subjecting the resulting mixture to dynamic vulcanization, i.e., conditions of shear at a temperature above the melting point of the polyketone (plastic) component.

In a related aspect, this disclosure provides thermoplastic elastomers comprising a plastic phase and a rubber phase as defined above as well as an addition-type curing agent. These compositions can also be used in the manufacture of the fully vulcanized products by merely subjecting the compositions to dynamic vulcanization.

### BRIEF DESCRIPTION OF THE FIGURES

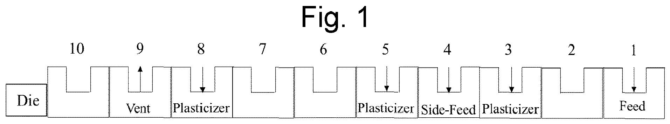

Figure 1 is a diagram of the barrel setup in the twin-screw extruder described and used in Example 1. The numbers refer to the barrels described in the examples.

### DETAILED DESCRIPTION

As used herein, the term thermoplastic vulcanizate (TPV) refers to a thermoplastic elastomer produced via dynamic vulcanization of a blend of a rubber phase and a thermoplastic polymer in the presence of a vulcanizing system.

The terms EPDM, ethylene-propylene-diene monomer rubber, EPDM rubber, ethylene propylene terpolymer, EPT, and ethylene-propylene-diene terpolymer are used interchangeably.

The terms semi-crystalline aliphatic polyketone, aliphatic polyketone, and aliphatic PK are used interchangeably.

As used herein, the term "dynamic vulcanization" means a vulcanization or curing process for a rubber contained in a thermoplastic vulcanizate composition, wherein the rubber is vulcanized under conditions of shear at a temperature above the melting point of the polyester component. The rubber is thus simultaneously cross-linked and typically dispersed as fine particles within the polyester matrix. Although particles are the typical morphology, other morphologies may also exist.

Thermoplastic vulcanizates typically have finely dispersed, micron-sized, crosslinked rubber particles distributed in a continuous thermoplastic matrix.

Unless otherwise specified, "parts" of a particular TPV component, e.g., plastic, rubber or curing agent, refers to parts by weight.

The disclosures of all patents and literature references identified herein are hereby incorporated by reference in their entirety.

As noted above, this disclosure provides thermoplastic vulcanizates comprising a plastic phase and a rubber phase.

This invention is a thermoplastic vulcanizate (TPV) material using aliphatic polyketone as the thermoplastic phase and EPDM as the rubber phase. Previous EPDM based TPV materials do not have sufficiently high temperature or sufficiently high hydrolysis resistance properties. The TPVs of this disclosure have improved high temperature and hydrolysis resistance properties.

This disclosure provides a melt processable rubber that does not require a curing process after extrusion. This allows for lower cost production of rubber and makes it able to be re-processed and recycled. The disclosed TPV formulations achieve these desirable properties while also being very flexible, particularly compared to the flexibility of polyketone materials. Using polyketone also permits the product to be produced using recycled material. For example, one of the polymer building blocks for polyketone is carbon monoxide, a waste product of burning fossil fuels. This is a significant advantage due to the increased desire in many industries to use recycled content, which to this point has been an obstacle for polymer and especially rubber hoses, which are difficult to recycle and accept only limited levels of re-grind/re-work.

### Thermoplastic phase

The thermoplastic vulcanizates disclosed herein comprise a plastic phase and a rubber phase. The plastic phase, sometimes referred to as the thermoplastic phase, comprises from about 30 parts to about 80 parts, based on 100 parts of total rubber and plastic, of an aliphatic polyketone having a melting point of from about 180°C to about 260°C.

The thermoplastic phase of the thermoplastic vulcanizate comprises an engineering plastic which is an aliphatic polyketone. The molecular weight of a suitable aliphatic polyketone is such that it is a suitable engineering plastic.

Aliphatic polyketones are produced from one or more olefin monomers and carbon monoxide. Representative aliphatic polyketones suitable for use in the thermoplastic vulcanizates of this disclosure include copolymers made from carbon monoxide, propylene and/or ethylene, and terpolymers produced from carbon monoxide, ethylene, and propylene. Suitable polyketones are available from Hyosung, including Poketone M710F which has a melting point (m.p.) of about 197°C, M610F (m.p. of about 200°C), M510R (m.p. of about 220°C), M630R (m.p. of about 222°C), M730A (m.p. of about 222°C). Plasticized aliphatic polyketones from Hyosung such as M71FR2C-NP1 and M71FR2A-NP1 are also suitable for use herein.

The melting point of the thermoplastic phase is between about 180°C and about 260°C. Thus, the aliphatic ketones suitable for use herein have melting points of about 180°C, about 190°C, about 200°C, about 210°C, about 220°C, about 230°C, about 240°C, about 250°C, or about 260°C.

Suitable amounts of thermoplastic phase (aliphatic polyketone) based on 100 parts of plastic and rubber in the TPV formulations include about 30 parts, about 35 parts, about 40 parts, about 45 parts, about 50 parts, about 55 parts, about 60 parts, about 65 parts, about 70 parts, about 75 parts, and about 80 parts.

### Rubber phase

The rubber phase of the composition comprises from about 20 parts to about 70 parts, based on 100 parts of total rubber and plastic, of an ethylene-propylene-diene monomer rubber (EPDM). EPDM is made from ethylene, propylene, and a diene comonomer that enables crosslinking of the rubber by, for example, sulfur, peroxide or phenolic resins. Particularly useful diene in EPDM is vinyl norbornene.

Suitable rubber materials useful herein are made from about 60-75 weight % ethylene and 2-8 weight % diene. Particularly useful EPDM rubber materials are those made with a diene which is ethylidene norbornene.

Representative EPDM pellet grades for use herein are EPT^{™} 3092 PM (ML(1+4, 125°C) = 61) which is made from about 65 weight % ethylene and 4.6 weight % diene (commercially available from Mitsui Chemicals), and Vistalon^{™} 5601 (ML(1+4, 125°C) = 72) which is made from 69 weight % ethylene and 5 weight % ethylidene norbornene (commercially available from ExxonMobil. Oil-extended grades like EPT^{™} 3072EPM, EPT^{™} 8120E, EPT^{™} 3072EM and EPT^{™} 3090EM which are commercially available from Mitsui Chemicals, and Vistalon 8800 which is commercially available from ExxonMobil are also of use herein.

Suitable amounts of EPDM based on 100 parts of plastic and rubber in the TPV formulations include about 20 parts, about 25 parts, about 30 parts, about 35 parts, about 40 parts, about 45 parts, about 50 parts, about 55 parts, about 60 parts, about 65 parts, and about 70 parts.

In certain embodiments, the melt blend comprises about 60 parts to about 70 parts by weight, based on 100 parts by weight of the plastic and rubber phases, of an aliphatic polyketone, and 40 parts to about 30 parts, by weight based on 100 parts by weight of the plastic and rubber phases, of EPDM.

In certain embodiments, the melt blend comprises about 55 parts to about 65 parts by weight, based on 100 parts by weight of the plastic and rubber phases, of an aliphatic polyketone, and 45 parts to about 35 parts, by weight based on 100 parts by weight of the plastic and rubber phases, of EPDM.

In certain embodiments, the melt blend comprises about 60 parts to about 65 parts by weight, based on 100 parts by weight of the plastic and rubber phases, of an aliphatic polyketone, and 40 parts to about 35 parts, by weight based on 100 parts by weight of the plastic and rubber phases, of EPDM.

In certain embodiments, the melt blend comprises about 45 parts to about 50 parts by weight, based on 100 parts by weight of the plastic and rubber phases, of an aliphatic polyketone, and 55 parts to about 50 parts, by weight based on 100 parts by weight of the plastic and rubber phases, of EPDM.

In certain embodiments, the melt blend comprises about 35 parts to about 40 parts by weight, based on 100 parts by weight of the plastic and rubber phases, of an aliphatic polyketone, and 65 parts to about 60 parts, by weight based on 100 parts by weight of the plastic and rubber phases, of EPDM.

In certain embodiments, the melt blend comprises about 34 parts to about 44 parts by weight, based on 100 parts by weight of the plastic and rubber phases, of an aliphatic polyketone, and 66 parts to about 56 parts, by weight based on 100 parts by weight of the plastic and rubber phases, of EPDM.

In certain embodiments, the melt blend comprises about 42 parts to about 52 parts by weight, based on 100 parts by weight of the plastic and rubber phases, of an aliphatic polyketone, and 58 parts to about 48 parts, by weight based on 100 parts by weight of the plastic and rubber phases, of EPDM.

### Curing Agent

The thermoplastic vulcanizates of this disclosure also include a curing agent that crosslinks reactive groups, i.e., the unsaturated sites, in the EPDM rubber

The amount of the curing agent in the thermoplastic vulcanizate ranges from about 0.1 to about 15 parts, based on 100 parts of rubber and plastic. Suitable curing agents for use herein, i.e., to produce crosslinks between reactive groups (unsaturated sites) in the EPDM rubber include sulfur- and peroxide-containing curing agents. Peroxide curing agents are preferred. The major classes of organic peroxides include diacyl peroxides, dialkyl peroxides, peresters, and hydroperoxides. Representative curing agents include dicumyl peroxide; di(2,4-dichlorobenzoyl)peroxide; 2,5-bis(tert-butylperoxy)-2,5-dimethylhex-3-yne; 2,5-dimethyl-2,5-di-t-butylperoxyhexane; 4-methylbenzoic peroxyanhydride; t-butyl peroxybenzoate; benzoyl peroxide; 1,1-Bis (t-butylperoxy) 3,3,5-trimethylcyclohexane; butyl 4,4-di(t-butylperoxoy)valerate; and 1,4-bis(2-(tert-butylperoxy)propan-2-yl)benzene, which is commercial available from Akrochem as VCP and Arkema as Vulcup^{®}.

Other suitable peroxides are benzoyl peroxide, t-butyl peroxypivalate, 2,4-dichlorobenzoyl peroxide, decanoyl peroxide, propionyl peroxide, hydroxyheptyl peroxide, cyclohexanone peroxide, 2,5-dimethylhexyl-2,5-di(peroxybenzoate), t-butyl perbenzoate, 2,5-dimethyl-2,5-di(benzoylperoxy)hexane, di-t-butyl peroxide, p-menthane hydroperoxide, cumene hydroperoxide, 2,5-dimethyl-2,5-di(hydroperoxy)hexane, t-butyl hydroperoxide, lauroyl peroxide, and t-amyl perbenzoate. These peroxides can be used in their raw powder or flake form, or can be used with an inorganic carrier such as silica or the like to reduce its activity, or premixed with rubber for easier handling.

The amount of the curative or peroxide curing agent is generally from about 0.1 to about 15, desirably from about 1 to 12 parts by weight for every 100 parts by weight of the aliphatic polyketone and rubber. Suitable amounts of peroxide curing agent include about 0.5, 1, 2, 3, 4, 5, 6, 7, 8, 9, 10, 11, 12, 13, 14 and 15 parts by weight for every 100 parts by weight of the rubber and the plastic. Particularly useful amounts of peroxide curing agent range from about 0.5 part to about 15 parts, or from about 0.5-10 parts, or from about 1-7 parts, or from about 2-6 parts, or from about 0.5-5 parts, or from about 0.5-4 parts, or from about 0.5-3 parts based on 100 parts of rubber and plastic.

### Coagent

The thermoplastic vulcanizates of this disclosure optionally include a coagent in an amount of up to about 15 parts, based on 100 parts of rubber and plastic. Suitable amounts of the coagent, when present, include about 0.5, 1, 2, 3, 4, 5, 6, 7, 8, 9, 10, 11, 12, 13, 14 and 15 parts by weight for every 100 parts by weight of the rubber and the plastic. Particularly useful amounts of the coagent range from about 0.5 part to about 15 parts, or from about 0.5-10 parts, or from about 0.5-7 parts, or from about 2-6 parts, or from about 3-6 parts, or from about 4-8 parts, or from about 0.5-5 parts, or from about 0.5-4 parts, or from about 0.5-3 parts based on 100 parts of rubber and plastic.

Coagents are classified based on their contributions to cure and include Type I and Type II curing agents. Type I coagents increase both the rate and state of cure. Type I coagents are typically polar, multifunctional low molecular weight compounds which form very reactive radicals through addition reactions. These "monomers" can be homopolymerized or grafted to polymer chains. Type II coagents form less reactive radicals and contribute only to the state of cure. They form radicals primarily through hydrogen abstraction. Type I coagents include multifunctional acrylate and methacrylate esters and dimaleimides. The zinc salts of acrylic and methacrylic acid also belong to this class. Type II coagents can include allyl containing cyanurates, isocyanurates and phthalates, homopolymers of dienes, and copolymers of dienes and vinyl aromatics.

Representative coagents include zinc dimethacrylate (ZDMA), commercially available from Cray Valley as Dymalink^{®} 634; zinc diacrylate (ZDA), commercially available from Cray Valley as Dymalink^{®} 633; trifunctional (meth)acrylate ester; N,N'-m-phenylene dimaleimide; poly(butadiene diacrylate); triallyl cyanurate; triallyl isocyanurate; and high vinyl poly(butadiene), commercially available as Ricon^{®} 154 from Cray Valley as well.

These coagents can be used in their raw powder or flake form, or can be used with an inorganic carrier such as silica or the like, or premixed with rubber for easier handling.

### Plasticizer

Thermoplastic vulcanizates disclosed herein can further comprise a plasticizer that may be melt miscible with both the rubber phase and the plastic phase. Plasticizers that are melt miscible with the TPV plastic phase, or rubber phase, or both, are useful in certain aspects of this disclosure. In certain embodiments, the plasticizer is not melt-miscible with either the rubber phase or the plastic phase.

The plasticizer can be used in an amount ranging up to about 35 parts, based on 100 parts of rubber and plastic phases in the formulation. Suitable amounts of plasticizer, based on 100 parts of rubber and plastic, in the TPV formulations are about 4 to 35 parts, about 8 to 20 parts, 4 to 25 parts, about 4 parts, about 5 parts, about 6 parts, about 7 parts, about 8 parts, about 9 parts, about 10 parts, about 11 parts, about 12 parts, about 13 parts, about 14 parts, about 15 parts, about 16 parts, about 17 parts, about 20 parts, about 25 parts, about 30 parts, or about 35 parts.

In certain aspects, a plasticizer is incorporated into the TPV formulation to achieve processable (low enough melt viscosity, excellent fabricated product surface appearance) TPV compositions with plastic content of about 70 weight per cent or lower, based on only the rubber and plastic in the composition. In certain situations, at this level of plastic, lack of plasticizer results in some molding machines being incapable of fabricating the TPV melt due to high viscosity, or the fabricated product exhibits severe melt fracture. The plasticizer is preferably miscible with the TPV plastic phase only, although plasticizers that are miscible with both the TPV rubber and plastic phase are also acceptable.

Particularly useful plasticizers for use herein are N-n-Butylbenzenesulfonamide (BBSA) which is commercially available from Lanxess as Uniplex 214 and from Axcentive as KETJENFLEX^{®} 4; N-ethyl-4-methylbenzenesulfonamide; Acrylonitrile Butadiene Styrene impact modifier resin which is commercially available from Galata Chemicals as Blendex^{®} 338; and 2,2,4-trimethyl-1,3-pentanediol diisobutyrate, which is commercially available from Eastman as TXIB^{™} Formulation Additive. Also suitable for use as plasticizers are paraffinic oils such as Sunpar 2280 which is commercially available from Holly Frontier and solvent dewaxed oils such as Hyprene P150BS which his commercially available from Ergon.

### Processing Aid

The thermoplastic vulcanizates of this invention can include a processing aid.

Suitable processing aids include maleated polyolefin plastics and rubbers, and maleated vinylidene fluoride polymers or copolymers. Other suitable processing aids are polypropylene, polyethylene, or vinylidene fluoride/hexafluoropropylene copolymer with 0.1 weight % to about 3 weight % of maleate group content.

The thermoplastic vulcanizates described herein can comprise up to about 35 parts of the processing aid based on 100 parts of total rubber and plastic phases. Particular embodiments include from about 4 to about 35 php of the processing aid based on 100 parts of total rubber and plastic phases. In certain embodiments, the amount of the processing aid, based on 100 parts of rubber and plastic, in the TPV formulations is about 0.5 to 10 parts, about 1 to 9 parts, about 2 to 7 parts, about 1 part, about 2 parts, about 3 parts, about 4 parts, about 5 parts, about 6 parts, about 7 parts, about 8 parts, about 9 parts, or about 10 parts.

### Optional Additives

In addition to the thermoplastic polymer, EPDM, the processing aid, the curing agent, the plasticizer, and the coagent, the thermoplastic vulcanizates disclosed herein can include various conventional additives such as reinforcing and non-reinforcing fillers, extenders, antioxidants, antiozonants, stabilizers, rubber processing oil, extender oils, lubricants, antiblocking agents, anti-static agents, waxes, foaming agents, pigments, flame retardants and other processing aids known in the rubber compounding art. Such additives can comprise up to about 60 weight percent of the total composition, and can be in the plastic phase, the rubber phase or both. Fillers and extenders which can be utilized include conventional inorganics such as calcium carbonate, clays, silica, talc, titanium dioxide, carbon black, and the like. The rubber processing oils generally are paraffinic, naphthenic or aromatic oils derived from petroleum fractions.

### Use

The thermoplastic vulcanizate compositions of this disclosure can be used in applications wherever nitrile rubber is used. The thermoplastic vulcanizates disclosed herein may be formed into a variety of products, including for example gaskets, tubes, hose, boots, seals, vibration dampeners, stators, fittings, housings, cases, films, shock absorbers, anti-vibration mounts, couplings, bushings, sleeves, bellows, foams, etc. The thermoplastic vulcanizates disclosed herein are particularly useful for manufacturing tubes and hoses comprising at least one layer comprising thermoplastic vulcanizate. The thermoplastic vulcanizates disclosed herein are particularly useful for use in automobiles.

Thus, they can be utilized as seals, as gaskets, hoses, boots, and the like, especially for automotive applications. The invention will be better understood by reference to the following examples which serve to illustrate, but not to limit, the present invention.

### Process

This invention is best practiced using equipment that can blend polymeric materials at a shear rate that permits intimate material melt blending, but at a shear rate that is low enough to prevent excessive material thermal and thermo-oxidative degradation, and also mechano-chemical degradation, due to shearing forces.

The residence time (about 1-2 minutes) of the polymer melt blend in the production equipment is also comparable to that used in commercially viable TPV manufacturing processes.

Plastic pellets, rubber pellets, processing aid, and coagent are fed into the throat of a 26 mm co-rotating twin screw extruder, as per the illustrative examples of the invention. After intimate rubber and plastic melt blending is achieved, curing agent is fed into the polymer melt blend as intensive mixing is continued to commence the dynamic vulcanization process. A plasticizer can be introduced in a liquid or solid form when convenient and appropriate during the process.

Precautions (barrel cooling, screw design) are taken to limit shear heating (due to the viscous drag of the molten plastic over the newly formed cross-linked rubber particles) in the dynamic vulcanization zone as the rubber is broken up into cross-linked particulate rubber, about 1µm to 10µm in diameter.

The curative and coagent may also be added as a powder, or as a masterbatch of powder and rubber, to the extruder feed throat.

In certain embodiments, the thermoplastic vulcanizate as described and claimed herein is prepared by dynamically crosslinking a melt blend with curing agent, wherein the melt blend comprises the plastic phase and the rubber phase; and wherein the crosslinks are formed in EPDM due to peroxide decomposition and radical formation.

In a further aspect, this disclosure provides a gasket, tube, hose, seal, vibration dampener, stator, fitting, housing, case, film, shock absorber, anti-vibration mount, coupling, bushing, sleeve, bellows, foam comprising the thermoplastic vulcanizate as described and claimed herein or formed from the thermoplastic elastomer as described and claimed herein; or a tube or hose having at least one layer comprising the thermoplastic vulcanizate as described and claimed herein or formed from the thermoplastic elastomer as described and claimed herein.

In still another aspect, this disclosure provides a process for producing a thermoplastic vulcanizate comprising mixing a composition comprising a plastic phase and a rubber phase with a curing agent, wherein the mixing is carried out under conditions of shear and at a temperature above the melting point of the plastic phase, and wherein the plastic phase comprises from about 30 parts to about 80 parts by weight, based on 100 parts by weight of the plastic and rubber phases, of an aliphatic polyketone, or mixtures thereof; and the rubber phase comprises from about 70 parts to about 20 parts, by weight based on 100 parts by weight of the plastic and rubber phases, of an EPDM rubber.

The present invention will be better understood by reference to the following examples, which serve to illustrate, but not limit, the practice of this invention.

### MATERIALS

### RUBBER

| **Trade Name** | **Description** |
|---|---|
| Vistalon^{™} 5601 | EXXONMOBIL: (Pellets) 69 wt% ethylene, 5 wt% ethylidene norbornene, ML (1+4, 125°C) = 72. |
| EPT^{™} 3092PM | MITSUI CHEMICALS: (Pellets) 65 wt% ethylene, 4.6 wt% diene, ML (1+4, 125°C) = 61. |
| Nordel^{™} IP 4785HM | DOW: (Pellets) 68 wt% ethylene, 4.9 wt% ethylidene norbornene, ML (1+4, 125°C) = 85. |

### PLASTIC MATERIALS

| **Trade Name** | **Description** |
|---|---|
| Poketone M610F | HYOSUNG: (Pellets) Aliphatic Polyketone, m.p. = 200°C, High viscosity grade, Melt Flow Rate (240°C, 2.16 kg) = 5-7 g/10min |

### Processing Aid

| **Trade Name** | **Description** |
|---|---|
| Bondyram 4108 | POLYRAM: (Pellets) Maleic Anhydride (MAH) Modified Polyethylene (0.9 wt% MAH), Melt Flow Index (190°C, 2.16 kg) = 1.0 g/10 min |
| Bondyram 7003 | POLYRAM: (Pellets) Maleic Anhydride (MAH) Modified Polyethylene (high wt% MAH), Melt Flow Index (230°C, 10 kg) = 5.0 g/10 min |

### PLASTICIZERS

| **Trade Name** | **Description** |
|---|---|
| Uniplex 214 | LANXESS: (Liquid) N-n-butylbenzene sulfonamide, b.p. = 314°C (BBSA). |
| TXIB | EASTMAN: (liquid) Trimethyl Pentanyl Diisobutyrate b.p. = 281°C |

### CURATIVE

| **Trade Name** | **Description** |
|---|---|
| Polydex E(VCP)20P | POLYCHEM DISPERSIONS: Masterbatch of VCP peroxide (t-butylperoxy-diisopropyl benzene) and rubber. |
| Polydex O(VCP)10P | POLYCHEM DISPERSIONS: Masterbatch of VCP peroxide (t-butylperoxy-diisopropyl benzene) and rubber. |

### Coagent

| Trade Name | Description |
|---|---|
| Polydex O(AO-ZDMA)60P | POLYCHEM DISPERSIONS: Masterbatch of ZDMA, antioxidant, and rubber |

### TPV compounding/extrusion

The PK/EPDM TPVs of this disclosure can be compounded in a batch mixer (e.g. RSI's Techmix 6) or a in continuous twin-screw extruder (e.g. Coperion ZSK 26) or a reciprocating kneader (e.g. BUSS Kneader MX-30).

TPVs of this disclosure made with aliphatic PK and EPDM are reactively compounded on a ZSK 26 mm, 10-barrel, co-rotating, Coperion two-lobe twin screw extruder having a L/D = 40 and barrels such as those shown in Figure 1. The maximum torque per screw shaft for this extruder is 106 Nm, the maximum allowable horsepower is 36 HP, and the maximum allowable screw speed is 1200 RPM.

The barrels of this extruder are:
Barrel #1 (Unheated): Conveying elements
Barrel #s 2 -3: Kneading elements to melt plastic materials and to produce an intimate rubber and plastic melt blend.
Barrel #s 4-8: Dynamic vulcanization zone: a combination of kneading elements ensures intensive polymer melt blending during dynamic vulcanization, while limiting rise in polymer melt blend temperature and pressure.
Barrel #s 9-10: Conveying elements.
Die: 3-hole

Material is fed into the extruder at an appropriate rate and screw speed selected to permit sufficient residence time for dynamic vulcanization to take place.

Plastic pellets, rubber pellets, coagent (as powder or coagent-rubber masterbatch), and processing aid are fed into the hopper attached to barrel #1. Curing agent as powder or rubber-curing agent masterbatch granules and antioxidant powder (if any), are fed together into barrel #4 via a side feeder. Plasticizer can be added when convenient and appropriate during the process.

Barrel temperatures are selected based on melting points and/or softening points of the plastic and other TPV components. Barrel temperatures should be adjusted to avoid component decomposition.

After extrusion, strands are water cooled, pelletized, and dried.

Barrel #4 are vented to the atmosphere and barrel #9 has vacuum venting zone, and the screw design facilitates the formation of a melt seal on both sides of these barrels.

### Laboratory Batch Mixer

A Techmix 6 (RSI) or Haake Rheomix^{™} 3000 (Thermofisher) mixer with three heating zones is used and connected to an ATR Plasti-Corder (C.W. Brabender) torque rheometer for temperature and torque control. The three zones and the stock temperature are set at temperatures above the melting point of the plastic phase. The mixing conditions are as follows: 5-15 minutes of total mixing time, 65-75% fill factor, 50-150 RPM rotor speed for Banbury rotors. The plastic, the rubber, the processing aid, and the coagent are first added to the mixer. After the melt blend was produced, the curative was added. The plasticizer can be added at any time during the mixing process.

### Single screw extrusion

TPV pellets are extruded into tapes using a single screw extruder, for physical property and process-ability testing. Tensile dumbbells are cut from the tapes. TPV pellets are also injection molded into tensile bars, flex bars, and compression set buttons.

A Brabender single screw extruder (L/D =25, 3/4" screw) is used and connected to an RS-5000 (RSI) torque rheometer for temperature and torque control. The three zones and the die are set at temperatures above the melting point of the plastic phase. The extrusion temperatures are depended on the aliphatic PK grade. The screw consists of a small Maddock mixing section, with the remaining sections being built-up of conveying elements.

### Injection molding

A Sumitomo Systec 90-310 injection molding machine having three heated zones and nozzle set at temperatures above the melting point of the plastic phase. The molding temperatures are depended on the aliphatic PK grade. Screw speed is 150 rpm, with different formulation dependent holding pressures, typically between 11-18 MPa.

### Compression Molding Machine

A Wabash MPI's Genesis Series Hydraulic Press with heated and water-cooled steel platens is used for compression molding the samples into plaques. The TPV sample is first pressed for 2-5 minutes between the heated platens at temperatures above the melting point of the plastic phase, and for 2-5 minutes between the water-cooled plates.

### Property testing

Tensile (5 specimens), flexural modulus (3 specimens), and hardness (5 measurements) tests are conducted according to ASTM D638, ASTM D790, and ASTM D2240, respectively. In all cases, the median test value is reported.

All quantities shown in the below tables are weight percentages unless otherwise specified. Although processing aids such as Bondyram 4108 can be considered plastic materials, they are not counted in the calculations of the relative amounts of plastic in the formulations described below. Similarly, non-EPDM rubber used as a carrier in the masterbatch of peroxide or coagent with rubber, is not counted in the calculations of the relative amounts of rubber in the formulations described below.

### Example 1

A TPV formulation compounded from EPT^{™} 3092PM (EPDM) and Poketone 610F (aliphatic polyketone) at 66/34 rubber/plastic ratio with t-butylperoxy-diisopropyl benzene as the curing agent and ZDMA as the coagent, are shown below in Table 1. These TPV formulations are prepared in the twin-screw extruder. The properties of these formulations and the processing conditions used to produce them are also presented in Table 1.

**Table 1. Formulations in Weight% for EPDM/PK TPVs Made on Twin-Screw Extruder.**

| | **Thermoplastic Vulcanizate (TPV) formulation** |
|---|---|
| **Formulation No.** | 1 |
| Poketone 610F | 58.73 |
| EPT^{™} 3092PM | 30.33 |
| Polydex E(VCP)20P | 2.27 |
| Polydex O(AO-ZDMA)60P | 0.52 |
| BBSA | 8.14 |
| **Property** | |
| Injection Molded: Tensile Strength @ RT (MPa) | 23.88 |
| Injection Molded: Elongation @ RT (%) | 88.00 |
| Injection Molded: Flexural Modulus @ RT (MPa) | 192.12 |
| Hardness, Instantaneous (Shore D) | 54.00 |
| **Twin-Screw Processing Conditions** | |
| Screw Speed Range (RPM) | 300-600 |
| Feed rate Range (lb/hr) | 15-80 |
| Average Torque (%) | 55 |

### Example 2

TPV formulations compounded from EPT^{™} 3092PM (EPDM) with Poketone 610F (aliphatic polyketone) at 59/41 rubber/plastic ratio with Bondyram 4108 (processing aid) and Vistalon^{™} 5601 (EPDM) with Poketone 610F (aliphatic polyketone) at 62/38 rubber/plastic ratio, with t-butylperoxy-diisopropyl benzene as the curing agent and ZDMA as the coagent, are shown below in Table 2. These TPV formulations are prepared in the laboratory mixer. The formulations and the properties of these formulations are shown below in Table 2.

**Table 2. Formulations in Weight% for EPDM/PK TPVs Made on Laboratory Mixer.**

| | **Thermoplastic Vulcanizate (TPV) Formulation** | |
|---|---|---|
| **Formulation No.** | **2** | **3** |
| Poketone 610F | 44.94 | 52.83 |
| EPT^{™} 3092PM | 0.00 | 32.95 |
| Vistalon^{™} 5601 | 31.05 | 0.00 |
| Bondyram 4108 | 4.99 | 0.00 |
| Polydex E(VCP)20P | 3.24 | 3.64 |
| Polydex O(AO-ZDMA)60P | 3.50 | 1.46 |
| BBSA | 12.27 | 9.11 |

| **Property** | | |
|---|---|---|
| Compression Molded: Tensile Strength @ RT (MPa) | 10.11 | 11.11 |
| Compression Molded: Elongation @ RT (%) | 70.60 | 64.40 |

### Example 3

A TPV formulation compounded from Vistalon^{™} 5601 (EPDM) with Poketone 610F (aliphatic polyketone) at 54/46 rubber/plastic ratio, with t-butylperoxy-diisopropyl benzene as the curing agent, ZDMA as the coagent, and without any plasticizer and a processing aid, is shown below in Table 3. This TPV formulation is prepared in the laboratory mixer. The formulation and the properties of this formulation is shown below in Table 3.

**Table 3. Formulation in Weight% for an EPDM/PK TPV Made on Laboratory Mixer.**

| | **Thermoplastic Vulcanizate (TPV) Formulation** |
|---|---|
| **Formulation No.** | **4** |
| Poketone 610F | 42.18 |
| Vistalon^{™} 5601 | 47.50 |
| Polydex E(VCP)20P | 4.96 |
| Polydex O(AO-ZDMA)60P | 5.36 |
| **Property** | |
| Compression Molded: Tensile Strength @ RT (MPa) | 9.39 |
| Compression Molded: Elongation @ RT (%) | 37.50 |

### Example 4

TPV formulations compounded from Vistalon^{™} 5601 (EPDM) with Poketone 610F (aliphatic polyketone) at different rubber/plastic ratios (39/61,42/58, and 42/58) with and without processing aids, with t-butylperoxy-diisopropyl benzene as the curing agent and ZDMA as the coagent, are shown below in Table 4. These TPV formulations are prepared in the laboratory mixer. The formulations and the properties of these formulations are shown below in Table 4.

**Table 4. Formulations in Weight% for EPDM/PK TPVs Made on Laboratory Mixer.**

| | **Thermoplastic Vulcanizate (TPV) Formulation** | | |
|---|---|---|---|
| **Formulation No.** | **5** | **6** | **7** |
| Poketone 610F | 50.56 | 44.86 | 44.94 |
| Vistalon^{™} 5601 | 30.66 | 31.10 | 31.05 |
| Bondyram 7003 | 0.00 | 4.98 | 0.00 |
| Bondyram 4108 | 0.00 | 0.00 | 4.99 |
| Polydex E(VCP)20P | 3.20 | 3.25 | 3.24 |
| Polydex O(AO-ZDMA)60P | 3.46 | 3.51 | 3.50 |
| TXIB | 12.11 | 12.29 | 12.27 |
| **Property** | | | |
| Compression Molded: Tensile Strength @ RT (MPa) | 8.47 | 7.11 | 6.36 |
| Compression Molded: Elongation @ RT (%) | 20.00 | 17.20 | 12.10 |

### Example 5

TPV formulations compounded from Nordel^{™} IP 4785HM (EPDM) and Poketone 610F (aliphatic polyketone) at 61/39 rubber/plastic ratio with different processing aids (Bondyram 4108 and Bondyram 7003), with t-butylperoxy-diisopropyl benzene as the curing agent and without any coagent, are shown below in Table 5. These TPV formulations are prepared in the twin-screw extruder. The properties of these formulations and the processing conditions used to produce them are also presented in Table 5.

**Table 5. Formulations in Weight% for EPDM/PK TPVs Made on Twin-Screw Extruder.**

| | **Thermoplastic Vulcanizate (TPV) formulation** | |
|---|---|---|
| **Formulation No.** | **8** | **9** |
| Poketone 610F | 36.00 | 36.00 |
| Nordel^{™} IP 4785HM | 56.60 | 56.60 |
| Polydex O(VCP)10P | 3.40 | 3.40 |
| Bondyram 7003 | 0.00 | 4.00 |
| Bondyram 4108 | 4.00 | 0.00 |
| **Property** | | |
| Tape Extruded: Tensile Strength @ RT (MPa) | 6.43 | 6.11 |
| Tape Extruded: Elongation @ RT (%) | 45.10 | 45.20 |
| Compression Molded: Tensile Strength @ RT (MPa) | 5.19 | 5.06 |
| Compression Molded: Elongation @ RT (%) | 23.70 | 25.90 |
| **Twin-Screw Processing Conditions** | | |
| Screw Speed Range (RPM) | 150-450 | 150-450 |
| Feed rate Range (lb/hr) | 10-60 | 10-60 |
| Average Torque (%) | 70 | 69 |

Having described the thermoplastic vulcanizates and methods for preparing using the thermoplastic vulcanizates in detail and by reference to specific examples thereof, it will be apparent that modifications and variations are possible without departing from the scope of what is defined in the appended claims. More specifically, although some aspects of the present disclosure are identified herein as particularly advantageous, it is contemplated that the present disclosure is not necessarily limited to these particular aspects of the disclosure.

Although the principles, embodiments and operation of the present invention have been described in detail herein, this is not to be construed as being limited to the particular forms disclosed. They will thus become apparent to those skilled in the art that various modifications of the embodiments herein can be made without departing from the spirit or scope of the invention.

Itemized list of embodiments:
1. A thermoplastic vulcanizate (TPV) material comprising polyketone as the thermoplastic polymer phase and EPDM as the rubber phase.
2. A thermoplastic vulcanizate comprising a blend of
   (a) a plastic phase comprising from about 30 parts to about 80 parts, based on 100 parts of total rubber and plastic, of an aliphatic polyketone having a melting point of from about 180°C to about 260°C; and
   (b) a rubber phase comprising from about 70 parts to about 20 parts, based on 100 parts of total rubber and plastic, of an ethylene-propylene-diene monomer rubber (EPDM);
   wherein crosslinks are present in the rubber.
3. A thermoplastic vulcanizate according to embodiment 2, wherein the crosslinks are formed by mixing the rubber with a peroxide curing agent.
4. A thermoplastic vulcanizate according to embodiment 3, wherein the peroxide curing agent is selected from diacyl peroxide, dialkyl peroxide, perester, hydroperoxide, or mixtures thereof.
5. A thermoplastic vulcanizate according to any one of embodiments 2-4, wherein the amount of the peroxide curing agent is from about 0.1 to about 15 parts, based on 100 parts of rubber and plastic.
6. A thermoplastic vulcanizate according to any one of embodiments 1-5, further comprising a coagent.
7. A thermoplastic vulcanizate according to embodiment 6, wherein the coagent is selected from multifunctional acrylate and methacrylate esters and dimaleimides, zinc salts of acrylic and methacrylic acid, allyl containing cyanurates, isocyanurates and phthalates, homopolymers of dienes, and coolymers of dienes and vinyl aromatics, and mixtures thereof.
8. A thermoplastic vulcanizate according to any one of embodiments 6-7, wherein the amount of the coagent is from about 0.1 to about 15 parts, based on 100 parts of rubber and plastic.
9. A thermoplastic vulcanizate according to any one of embodiments of 1-8, further comprising a plasticizer.
10. A thermoplastic vulcanizate according to embodiment 9, wherein the plasticizer is melt miscible with the rubber phase and the plastic phase.
11. A thermoplastic vulcanizate according to embodiment 9 or embodiment 10, wherein the plasticizer is capable of functioning as a plasticizer for one or both of the plastic phase or rubber phase at the plastic melt temperature.
12. A thermoplastic vulcanizate according to any one of embodiments 9-11, wherein the plasticizer is selected from sulfonamides and acid esters.
13. A thermoplastic vulcanizate according to any one of embodiments 9-12, wherein the thermoplastic vulcanizate comprises from about 4 to about 35 parts of the plasticizer based on 100 parts of total rubber and plastic phases.
14. A thermoplastic vulcanizate according to any one of embodiments 1-13, further comprising a processing aid.
15. A thermoplastic vulcanizate according to embodiment 13, wherein the processing aid is selected from maleated polyolefin plastics and rubbers, or maleated vinylidene fluoride polymers or copolymers, and the thermoplastic vulcanizate comprises from about 4 to about 35 parts of the processing aid based on 100 parts of total rubber and plastic phases.
16. A thermoplastic vulcanizate according to embodiment 1 or 2, which is prepared by dynamically crosslinking a melt blend with a peroxide curing agent, wherein the melt blend comprises a plastic phase and a rubber phase, and
   the plastic phase comprises from about 30 parts to about 80 parts by weight, based on 100 parts of total plastic and rubber, of an aliphatic polyketone having a melting point of from about 180°C to about 260°C; and
   the rubber phase comprises from about 70 parts to about 20 parts, based on 100 parts of total rubber and plastic, of an ethylene-propylene-diene monomer rubber (EPDM).
17. A gasket, tube, hose, seal, vibration dampener, stator, fitting, housing, case, film, shock absorber, anti-vibration mount, coupling, bushing, sleeve, or bellows, or foam comprising a thermoplastic vulcanizate according to any one of embodiments 1-16.
18. A tube or hose comprising at least one layer comprising a thermoplastic vulcanizate according to any one of embodiments 1-16.
19. A process for producing a thermoplastic vulcanizate comprising mixing a composition comprising a plastic phase and a rubber phase with a peroxide curing agent, wherein the mixing is carried out under conditions of shear and at a temperature above the melting point of the plastic phase, and wherein
   the plastic phase comprises from about 30 parts to about 80 parts, based on 100 parts of total rubber and plastic, of an aliphatic polyketone having a melting point of from about 180°C to about 260°C; and
   the rubber phase comprises from about 70 parts to about 20 parts, based on 100 parts of total rubber and plastic, of an ethylene-propylene-diene monomer rubber (EPDM).
20. A process according to embodiment 19, wherein the rubber phase and the plastic phase are melt blended prior to the addition of the peroxide curing agent.
21. A process according to embodiment 19, wherein the rubber phase and the plastic phase are melt blended while the peroxide curing agent is added to the composition.
22. A process according to any one of embodiments 19-21, wherein the conditions of shear are such that a maximum shear rate is less than 10,000s⁻¹.

## Claims

1. A thermoplastic vulcanizate (TPV) material comprising polyketone as the thermoplastic polymer phase and EPDM as the rubber phase.

2. A thermoplastic vulcanizate comprising a blend of
(a) a plastic phase comprising from about 30 parts to about 80 parts, based on 100 parts of total rubber and plastic, of an aliphatic polyketone having a melting point of from about 180°C to about 260°C; and
(b) a rubber phase comprising from about 70 parts to about 20 parts, based on 100 parts of total rubber and plastic, of an ethylene-propylene-diene monomer rubber (EPDM);
wherein crosslinks are present in the rubber.

3. A thermoplastic vulcanizate according to claim 2, wherein the crosslinks are formed by mixing the rubber with a peroxide curing agent.

4. A thermoplastic vulcanizate according to claim 3, wherein the peroxide curing agent is selected from diacyl peroxide, dialkyl peroxide, perester, hydroperoxide, or mixtures thereof.

5. A thermoplastic vulcanizate according to any one of claims 1-4, further comprising a coagent.

6. A thermoplastic vulcanizate according to claim 5, wherein the coagent is selected from multifunctional acrylate and methacrylate esters and dimaleimides, zinc salts of acrylic and methacrylic acid, allyl containing cyanurates, isocyanurates and phthalates, homopolymers of dienes, and coolymers of dienes and vinyl aromatics, and mixtures thereof.

7. A thermoplastic vulcanizate according to any one of claims 1-6, further comprising a plasticizer.

8. A thermoplastic vulcanizate according to claim 7, wherein the plasticizer is selected from sulfonamides and acid esters.

9. A thermoplastic vulcanizate according to any one of claims 1-8, further comprising a processing aid.

10. A thermoplastic vulcanizate according to claim 1 or 2, which is prepared by dynamically crosslinking a melt blend with a peroxide curing agent, wherein the melt blend comprises a plastic phase and a rubber phase, and
the plastic phase comprises from about 30 parts to about 80 parts by weight, based on 100 parts of total plastic and rubber, of an aliphatic polyketone having a melting point of from about 180°C to about 260°C; and
the rubber phase comprises from about 70 parts to about 20 parts, based on 100 parts of total rubber and plastic, of an ethylene-propylene-diene monomer rubber (EPDM).

11. A gasket, tube, hose, seal, vibration dampener, stator, fitting, housing, case, film, shock absorber, anti-vibration mount, coupling, bushing, sleeve, or bellows, or foam comprising a thermoplastic vulcanizate according to any one of claims 1-10.

12. A tube or hose comprising at least one layer comprising a thermoplastic vulcanizate according to any one of claims 1-10.

13. A process for producing a thermoplastic vulcanizate comprising mixing a composition comprising a plastic phase and a rubber phase with a peroxide curing agent, wherein the mixing is carried out under conditions of shear and at a temperature above the melting point of the plastic phase, and wherein
the plastic phase comprises from about 30 parts to about 80 parts, based on 100 parts of total rubber and plastic, of an aliphatic polyketone having a melting point of from about 180°C to about 260°C; and
the rubber phase comprises from about 70 parts to about 20 parts, based on 100 parts of total rubber and plastic, of an ethylene-propylene-diene monomer rubber (EPDM).

14. A process according to claim 13, wherein the rubber phase and the plastic phase are melt blended prior to the addition of the peroxide curing agent.

15. A process according to claim 13, wherein the rubber phase and the plastic phase are melt blended while the peroxide curing agent is added to the composition.
